# EUROPEAN PATENT SPECIFICATION

(11) **EP 2 008 807 B1**
(45) Date of publication and mention of the grant of the patent: **29.08.2018**
(21) Application number: 08158706.5
(22) Date of filing: 20.06.2008
(51) Int. Cl.: B32B 3/18, B32B 18/00

(54) **Ceramic matrix composite structure having fluted core and method of making the same**
Keramikmatrixverbundstruktur mit profiliertem Kern und Herstellungsverfahren dafür
Structure composite à matrice en céramique disposant d'un coeur cannelé et son procédé de fabrication

(30) Priority: 28.06.2007 US 770035
(43) Date of publication of application: 31.12.2008
(73) Proprietor: The Boeing Company, Chicago, IL 60606-1596 (US)
(72) Inventor: Lehman, Leanne L., CA 92656, Aliso Viejo (US); McCann, John R., CA 92660, Newport Beach (US)
(74) Representative: Witte, Weller & Partner Patentanwälte mbB

(56) References cited:
- EP-A2- 1 930 548
- US-A- 4 822 660
- US-A- 5 225 015
- US-A- 5 338 594
- US-A- 5 372 868
- US-A- 5 469 686
- US-A- 5 601 674
- US-A- 5 632 834
- US-A1- 2003 059 577
- US-B1- 6 743 504

## Description

This disclosure generally relates to ceramic matrix composite structures, and deals more particularly with a sandwich construction having a load-carrying fluted core, as well as a method for making the structure.

Ceramic matrix composite (CMC) structures are often used in aerospace and other applications because of their ability to withstand relatively high operating temperatures. For example, CMC structures may be used to fabricate parts subjected to high temperature exhaust gases in aircraft applications. Various CMC's have been employed to fabricate either monocoque structures or structures that employ a combination of tile and/or foam sandwich constructions, but neither of these types of structures may be well suited for carrying loads. In the case of CMC monocoques, the materials must be relatively thick in order for the structure to carry a load, but the additional material thickness adds weight to the aircraft. CMC tile/foam sandwich materials have not been widely used in load carrying applications, in part because of their relatively weak core materials.

From the US 2003/0059577 A1 a multi-layer ceramic matrix composite structure according to the preamble of claim 1 is known. The known structure is a multi-layer ceramic matrix composite structure having a plurality of fiber-reinforced cooling passages formed therein. The cooling passages are formed by the removal of a fugitive material which is part of a wrapped fugitive material structure containing a layer of reinforcing ceramic fibers that is used to lay-up the multi-layer structure. An intermediate layer of ceramic fabric may be placed alternately over and under the wrapped fugitive material structure to separate the cooling passages into alternating upper and lower cooling passages. Also a method of making such a multi-layer ceramic matrix composite structure is disclosed herein.

The known structure and the known method are specifically tailored to a multi-layer ceramic matrix composite structure having a plurality of cooling passages formed therein. Thus, the structure is not optimized for a lightweight, load carrying structure.

From US 4 822 660 A a further lightweight ceramic structure and method of making same are known, wherein a pair of spaced apart, ceramic matrix composite facesheets are used between which an array of relatively thin-walled, hollow, high-stiffness channeled ceramic support elements is enclosed. The support elements are bonded to the facesheets and positioned for bonding so that the channel axis of each support element is generally parallel with the facing sheets. The support elements are made from a fiber-reinforced composite ceramic material wherein the orientation of the fibers within the support is controlled to achieve higher strength and stiffness.

Although this structure may have a good mechanical strength, it is still relatively heavy.

Further reference is made to US 5 632 834 A which discloses a further sandwich structure made from fiber-reinforced ceramics. In the process of making such a structure a sandwich structure is prepared which includes a base substance of a ceramic matrix consisting of a Si-organic polymer and a ceramic or metallic powder. A cross-linking of the Si-organic polymer takes place under increased pressure and an increased temperature. After the joining of the facings and the honeycomb core, the sandwich structure is pyrolysed to form a ceramic material.

Also this structure is not optimized with respect to high strength and low weight.

Document US 5,372,868 describes a glass-ceramic matrix composite article, which comprises spaced apart facesheets connected by ribs that extend between the facesheets. The fibers in the ribs are interwoven with the fibers in the facesheets. The ribs extending between the facesheets define rectangular cross sectioned cells, which may be partially or completely filled with a material having a composition which is different from the matrix material.

In view of this it is an object of the invention to disclose a CMC structure that is relatively lightweight, but yet has sufficient structural strength to be self-supporting and capable of carrying loads. Also a method of making such a structure shall be disclosed.

This object is achieved by a ceramic matrix composite structure according to claim 1 and by a method of making such a structure according to claim 7.

Further embodiments are subject of the depending claims.

Embodiments of the disclosure provide a CMC sandwich construction that allows fabrication of structures having various geometries, including curved surfaces and reinforced features that allow the structures to be mounted using the fasteners. The disclosed embodiments employ a CMC sandwich incorporating a fluted core formed of a CMC that strengthens the structure and allows it to carry loads. The CMC fluted core structure may be fabricated using commercially available materials and well known polymer layup techniques to produce a wide variety of parts, components and assemblies, especially those used in the aircraft industry.

According to one disclosed embodiment, a ceramic matrix composite structure is provided, comprising a pair of spaced apart, CMC facesheets, and a load carrying core between at least a portion of the facesheets, wherein the core includes CMC flute members. The flute members may form a closed cell that may or may not be filled with any of a variety of high temperature materials. The flute members may be formed of ceramic matrix composite material having a wall cross section in the shape of an isosceles trapezoid, or other geometric shape. The flute members are arranged in side-by-side, nested relationship between the CMC facesheets.

According to another embodiment, a CMC sandwich is provided, comprising a pair of spaced apart, CMC facesheets, and a plurality of CMC flutes between at least a portion of the facesheets for transmitting compression and shear loads between the facesheets. The facesheets may include both flat and curved sections, and the flutes may include walls conforming to the curvature of the facesheets. Portions of the facesheets may be directly laminated together to provide a reinforced structural area suitable for being pierced by mounting fasteners.

According to a method embodiment of the disclosure, CMC structures may be fabricated by a method comprising the steps of: forming a plurality of flutes using a CMC; placing the flutes between a pair of CMC facesheets; and, bonding the flutes to the facesheets. The flutes may be formed by wrapping ceramic matrix prepreg fabric over a tool and then curing the prepreg. The tool may be either a permanent tool that is later removed, or a rigid, fugitive foam.
According to another method embodiment, a CMC sandwich for use in aerospace structures may be fabricated by a method comprising the steps of: forming a load carrying structural core using CMC material; placing the core between a pair of CMC facesheets, and fusing the facesheets with the core. The core may be formed by fabricating a plurality of flutes, placing the flutes in nested, side-by-side relationship, and then laminating the flutes between the facesheets.
According to another embodiment a ceramic matrix composite sandwich is disclosed, comprising:
a pair of spaced apart, ceramic matrix composite facesheets; and,
a plurality of ceramic matrix composite flutes between at least a portion of the facesheets for carrying compression and shear loads between the facesheets.
According to a further embodiment of the invention each of the flutes includes four walls forming substantially an isosceles trapezoid in cross section.
According to a further embodiment of the invention the facesheets include a flat section and a curved section, and the flutes include walls conforming to the curvature of the facesheets in the curved section. The flutes are filled with a rigid ceramic foam.
The facesheets may be laminated together according to a further embodiment of the invention.

The ceramic matrix composite sandwich further comprises a solid ceramic core bonded between a portion of the facesheets.
According to a further embodiment of the invention each of the flutes includes:
a first pair of spaced apart walls respectively engaging the facesheets, and
a second part of spaced apart walls connected to the first pair of walls and extending between the facesheets.
According to a further embodiment of the invention the flutes are nested together and include voids therebetween, and the core further includes foam insulation filling the space between the first and second composite sheets.
The invention also discloses a method of fabricating a ceramic matrix composite structure, comprising the steps defined in present claim 7. The method further comprising may comprise the step of:
(D) designing an aircraft assembly incorporating the structure.
In addition, the method may comprise the step of:
(D) procuring the material used to fabricate the structure.
According to a further embodiment the method of fabricating a ceramic matrix composite structure the fabricating of the structure may form part of an operation for manufacturing an aircraft assembly.
The invention further discloses an aircraft assembly using the structure fabricated according to the method of fabricating a ceramic matrix composite structure.

Also a method of fabricating a ceramic matrix composite sandwich for use in aerospace structures is disclosed, comprising the steps of:
(A) forming a load bearing structural core using ceramic matrix composite material;
(B) placing the core between a pair of ceramic matrix composite facesheets; and,
(C) fusing the facesheets with the core.

According to a further embodiment in the in the aforementioned method step (A) may include fabricating a plurality of flutes, and placing the flutes in side-by-side relationship.

Also a method of fabricating a ceramic matrix composite sandwich for use in aerospace structures is disclosed wherein the flutes are fabricated by wrapping ceramic matrix prepreg over a tool, and curing the prepreg.

According to a further embodiment step (A) includes placing fillers in voids between the face sheets and the core.

According to a further embodiment step (C) is performed by co-curing the core and the facesheets.

Other features, benefits and advantages of the disclosed embodiments will become apparent from the following description of embodiments, when viewed in accordance with the attached drawings and appended claims. In the drawings:
- Figure 1: is a perspective illustration of a CMC sandwich according to one embodiment.
- Figure 2: is an enlarged, cross sectional illustration of a portion of the sandwich shown in Figure 1.
- Figure 3: is a perspective illustration showing a section of another embodiment of a CMC structure, incorporating both curved and flat sections.
- Figure 4: is a cross sectional illustration of the CMC structure shown in Figure 3.
- Figure 5: is a cross sectional illustration of the area designated as "A" in Figure 4.
- Figure 6: is a cross sectional illustration of the area designated as "B" in Figure 4.
- Figure 7: is a simplified block diagram illustrating the steps of a method for fabricating a CMC structure.
- Figure 8: is a flow diagram of an aircraft production and service methodology.
- Figure 9: is a block diagram of an aircraft.

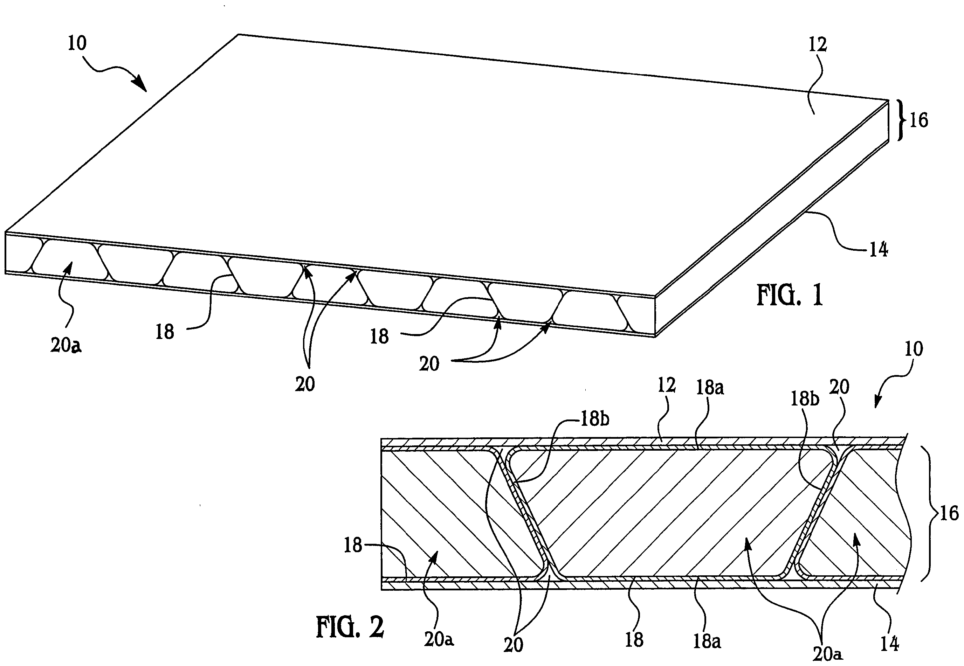

Referring first to Figures 1 and 2, a CMC structure 10 is formed from a sandwich of materials comprising an inner, load carrying core 16 sandwiched between a pair of outer, CMC facesheets 12, 14. In the illustrated example, the facesheets 12, 14 are flat and extend substantially parallel to each other, however as will be discussed below, other geometries are possible, including without limitation non-parallel curvilinear, and combinations of curvilinear and rectilinear.

Each of the facesheets 12, 14 may comprise multiple layers or plies of ceramic fiber material impregnated with a matrix material or "prepreg". As used herein, the term "ceramic" refers to the conventionally known and commercially available ceramic materials that are fabricated in a fiber form. The ceramic fibers may include, but are not limited to, silicon carbide, silica, TYRANNO®, alumina, aluminoborosilicate, silicon nitride, silicon boride, silicon boronitride, and similar materials.

The load carrying core 16 may function to transmit compressive, tensile and shear loads between the facesheets 12, 14, allowing the CMC structure 10 to be both self-supporting and load carrying. The CMC structure 10 is particularly well suited to high temperature applications since all of the composite materials in the CMC structure 10 are ceramic-based. The core 16 comprises a plurality of elongate flute members 18 which are bonded together in nested, side-by-side relationship between the facesheets 12, 14. The flute members 18 may be hollow, or may be filled with any of a variety of ceramic materials, including, without limitation, rigid ceramic tile or foam, ceramic felt, other fibrous ceramic insulation (soft or rigid), monolithic ceramics, etc.

One rigid foam suitable for use in filling the flute members 18 is disclosed in US Patent 6,716,782 which is fully incorporated by reference. The rigid foam insulation described in this prior patent is a combination of ceramic fibers which are sintered together to form a low density, highly porous material with low thermal conductivity. This foam exhibits high tensile strength and good dimensional stability. As used herein, "high temperature" material is generally intended to refer to temperatures above which polymeric materials exhibit diminished capacity.

In the particular embodiment illustrated in Figures 1 and 2, the flute members 18 include walls 18a, 18b form, in cross section, an isosceles trapezoid, however other shapes are possible, including for example, without limitation, rectangular, triangular, square, and any of various trapezoidal shapes. The size and shape of the flute members 18 may vary from one end of the CMC structure 10 to the other. The flute members may extend in the direction of the length and/or the width of the CMC structure 10, depending on the application and the load requirements.

The walls 18a, 18b form bridging elements that provide load paths between the facesheets 12, 14. As best seen in Figure 2, one pair of the walls 18a of the flute member 18 extend parallel to each other and are bonded to the facesheets 12, 14, respectively. The other pair of walls 18b are inclined in opposite directions and extend transverse to the facesheets 12, 14 so as to transmit both shear and compression force components between the facesheets 12, 14.

The walls 18b of adjacent flute members 18 may be bonded together in face-to-face contact. The intersection of adjacent flute members 18 and facesheets 12, 14 form voids that may be filled with fillers 20 in the form of elongate "noodles" that have a cross sectional shape matching that of the void; in the illustrated example, the voids, and the noodle fillers 20 are triangular in cross section. The noodle fillers 20 may be made with CMC prepreg, tape, tows, or filaments, and function to more evenly distribute and transmit loads between the facesheets 12, 14.

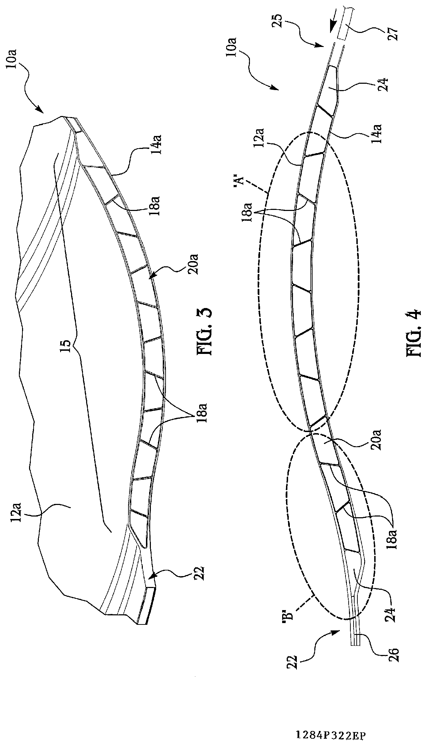

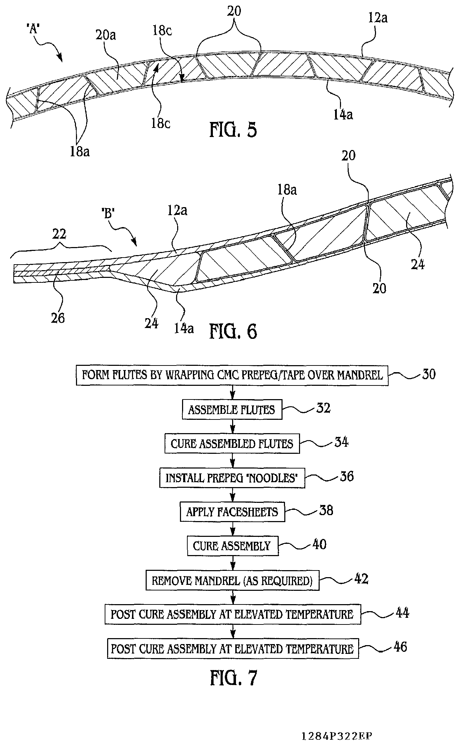

Referring now to Figures 3-6 an alternate embodiment CMC structure 10a includes first and second CMC facesheets 12a, 14a. One section 15 of the CMC structure 10a includes a fluted core defined by flute members 18a having cavities 20a which may or may not be filled with a suitable low density, high temperature rigid foam such as a ceramic foam previously described. Unlike the CMC structure 10 shown in Figures 1 and 2, section 15 in the CMC structure 10a is curved. Accordingly, the flute members 18a have top and bottom walls 18c (Figure 5) that may be slightly curved to match the curvature of facesheets 12a, 14a. On one end of the structure 12a, the facesheets 12a, 14a may taper inwardly, also called a ramp down, at 24 and may be laminated directly together to form a solid section 22 of the CMC structure 10a. A ceramic structural member, such as a solid ceramic insert 26 may be sandwiched between facesheets 12a, 14a in the solid section 22 of the structure 10a to provide additional strength and stiffness. The solid section 22 provides a reinforced area having sufficient strength and stiffness to allow fasteners (not shown) to pierce the structure 10a in order to attach the structure 10a.

Multiple flat or curved structures 10, 10a may be bonded together or interconnected using, for example, a bayonet-like interconnection shown in Figure 4 in which the facesheets 12a, 14a taper at 24 to form a female socket 25 that receives a solid male projection 27 forming part of an adjacent structure 10, 10a.

A method for fabricating the structures 10, 10a is illustrated in Figure 7. Beginning at step 30, the flute members 18 are formed by wrapping one or more plies of CMC prepreg or tape around or over a mandrel tool (not shown). The tool may comprise, without limitation, solid metal, permanent tooling, or a rigid foam member which may or may not be fugitive, but possesses the shape of the flute member 18 to be formed. The mandrel tool may be formed of other materials such as ceramic tile, ceramic foam or organically rigidized ceramic batting.

Next, at step 32, the wrapped flute members 18 are assembled together by nesting them in side-by-side relationship, following which the assembled flute members 18 are cured at step 34 normally at elevated temperature and pressure. At step 36, the prepreg noodle fillers 20 are installed in the voids between adjacent flute members 18.

At step 38, the facesheets 12, 14 are applied to each side of the assembled flute members 18, and the resulting sandwich assembly is then cured in the normal manner which may involve, for example, placing the sandwich assembly in an autoclave (not shown). The facesheets 12, 14 may be formed using a layup of woven fabric prepreg, tape/tow placement or filament winding.

Following the curing step at 40, the mandrels are removed at step 42 if they comprise permanent tooling. Otherwise the fugitive foam mandrels are left in place, and the entire sandwich assembly is post-cured at elevated temperatures, as shown at step 44. Depending on the type of rigid foam used as the mandrel tool, the elevated temperatures during the post-curing step 44 may be sufficient to incinerate the mandrel tools. Subsequently, non-destructive inspection techniques such as thermography or CT scanning can be used at step 46 (see Figure 7) to verify that the facesheets 12, 14 do not contain delaminations, and that good adhesion has been obtained between the flute members 18.

Where a CMC structure 10a is to be fabricated having curved sections, appropriate layup tooling (not shown) may be provided for forming the facesheets 12a, 14a into the desired shapes. The flute members 18 may be filled with a flexible, organic fugitive foam mandrel (not shown) so that the flute members 18 conform to the curved shape of the facesheets 12a, 14a. The fugitive foam mandrel may be either be washed out or pyrolyzed during the CMC post curing step 44.

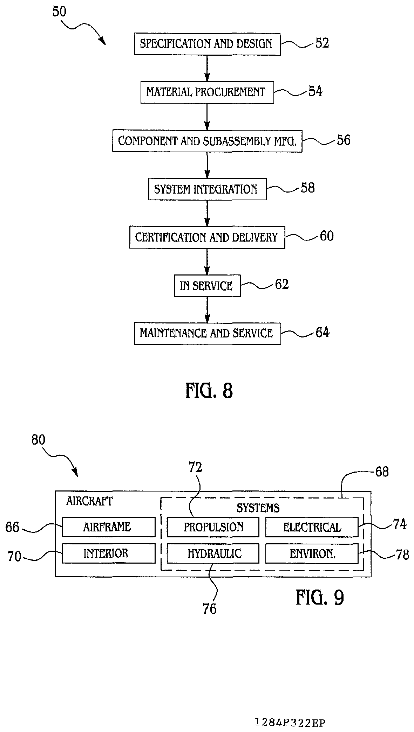

The embodiments of the disclosure described above may be described in the context of an aircraft manufacturing and service method 50 as shown in Figure 8 and an aircraft 80 as shown in Figure 9. During pre-production, exemplary method 50 may include specification and design 52 of the aircraft 80 and material procurement 54. During production, component and subassembly manufacturing 56 and system integration 58 of the aircraft 76 takes place. Thereafter, the aircraft 80 may go through certification and delivery 60 in order to be placed in service 62. While in service by a customer, the aircraft 80 is scheduled for routine maintenance and service 64 (which may include modification, reconfiguration, refurbishment, and so on).

Each of the processes of method 50 may be performed or carried out by a system integrator, a third party, and/or an operator (e.g., a customer). For the purposes of this description, a system integrator may include without limitation any number of aircraft manufacturers and major-system subcontractors; a third party may include without limitation any number of venders, subcontractors, and suppliers; and an operator may be an airline, leasing company, military entity, service organization, and so on.

As shown in Figure 9, the aircraft 80 produced by exemplary method may include an airframe 92 with a plurality of systems 68 and an interior 70. Examples of high-level systems 68 include one or more of a propulsion system 72, an electrical system 74, a hydraulic system 76, and an environmental system 78. Any number of other systems may be included. Although an aerospace example is shown, the principles of the invention may be applied to other industries, such as the automotive industry.

Apparatus and methods embodied herein may be employed during any one or more of the stages of the production and service method 50. For example, components or subassemblies corresponding to production process 56 may be fabricated or manufactured in a manner similar to components or subassemblies produced while the aircraft 80 is in service. Also, one or more apparatus embodiments, method embodiments, or a combination thereof may be utilized during the production stages 56 and 58, for example, by substantially expediting assembly of or reducing the cost of an aircraft 80. Similarly, one or more of apparatus embodiments, method embodiments, or a combination thereof may be utilized while the aircraft 80 is in service, for example and without limitation, to maintenance and service 64.

Although the embodiments of this disclosure have been described with respect to certain exemplary embodiments, it is to be understood that the specific embodiments are for purposes of illustration and not limitation, as other variations will occur to those of skill in the art.

## Claims

1. A ceramic matrix composite structure (10a), comprising:
a pair of spaced apart, ceramic matrix composite facesheets (12, 12a, 14, 14a); and
a load carrying core (16) between at least a portion of the facesheets (12, 12a, 14, 14a), the load carrying core (16) including ceramic matrix composite flutes (18, 18a), wherein at least certain of the flutes (18, 18a) include a closed cell filled with ceramic foam,
**characterized by** further comprising
a solid structural core between another portion of the facesheets (12a, 14a).

2. The ceramic composite structure of claim 1, **characterized in that** the cell includes a continuous wall (18, 18a, b, c) defined by compacted multiple plies of ceramic fiber reinforced resin.

3. The ceramic composite structure of any of claims 1 to 2, **characterized in that** each of the facesheets (12, 12a, 14, 14a) includes compacted multiple plies of ceramic fiber reinforced resin.

4. The ceramic composite structure of any of claims 1 to 3, **characterized in that**:
the flutes (18, 18a) are arranged in side-by-side relationship and define voids therebetween, and
the load carrying core (16) further includes filler strips (20) filling the voids.

5. The ceramic composite structure of any of the preceding claims, **characterized in that**:
at least a section of each of the facesheets (12a, 14a) is curved, and
the flutes (18a) conform to the curvature of the facesheet section.

6. The ceramic composite structure of any of the preceding claims, **characterized in that** each of the flutes (18, 18a) has a cross sectional shape forming substantially an isosceles trapezoid.

7. A method of fabricating a ceramic matrix composite structure (10a), comprising the steps of:
(A) forming a plurality of flutes (18, 18a) using a ceramic matrix composite;
(B) placing the ceramic matrix composite flutes (18, 18a) formed in step (A) as a load carrying core (16) between at least a portion of a pair of spaced apart ceramic matrix composite facesheets (12, 12a, 14, 14a), wherein at least certain of the flutes (18, 18a) include a closed cell filled with ceramic foam;
(C) bonding the flutes (18, 18a) to the facesheets (12, 12a, 14, 14a); **characterized by**
(D) placing a further solid ceramic core between another portion of the facesheets (12a, 14a); and
(E) bonding the other portion of facesheets (12a, 14a) to the solid ceramic core.

8. The method of claim 7, wherein step (A) includes at least one of the following steps:
- wrapping ceramic matrix prepreg fabric over the tool, and curing the prepreg;
- forming a tool by shaping a rigid foam into a mandrel;
- incinerating the foam after the prepreg has been cured.

9. The method of claim 7 or 8, wherein step (A) includes:
arranging the flutes (18, 18a) in side-by-side nested relationship, and
curing the arranged flutes (18, 18a).

10. The method of any of claims 7 to 9, further comprising the step of installing filler (20) in voids between adjacent flutes (18, 18a) and the facesheets (12, 12a, 14, 14a).

11. The method of any of claims 7 to 10, further comprising the step of:
(D) laminating together portions of the facesheets (12, 12a, 14, 14a).

12. The method of any of claims 7 to 11, wherein step (C) is performed by co-curing the facesheets (12, 12a, 14, 14a) and the flutes (18, 18a).

## Patentansprüche

1. Keramikmatrix-Verbundstruktur (10a) mit:
einem Paar räumlich getrennter, Keramikmatrix-Verbunddeckschichten (12, 12a, 14, 14a); und
einem tragenden Kern (16) zwischen mindestens einem Abschnitt der Deckschichten (12, 12a, 14, 14a), wobei der tragende Kern (16) Keramikmatrix-Verbundkannelierungen (18, 18a) aufweist, wobei mindestens einige der Kannelierungen (18, 18a) eine mit Keramikschaum gefüllte geschlossene Zelle aufweisen,
**dadurch gekennzeichnet, dass** ferner
ein fester Strukturkern zwischen einem anderen Abschnitt der Deckschichten (12a, 14a) enthalten ist.

2. Keramik-Verbundstruktur nach Anspruch 1, **dadurch gekennzeichnet, dass** die Zelle eine kontinuierliche Wandung (18, 18a, b, c) aufweist, die durch zusammengepresste, mehrere Schichten aus Keramikfaser verstärktem Harz definiert ist.

3. Keramik-Verbundstruktur nach einem der Ansprüche 1 bis 2, **dadurch gekennzeichnet, dass** jede der Deckschichten (12, 12a, 14, 14a) zusammengepresste, mehrere Schichten aus Keramikfaser verstärktem Harz aufweist.

4. Keramik-Verbundstruktur nach einem der Ansprüche 1 bis 3, **dadurch gekennzeichnet, dass**:
die Kannelierungen (18, 18a) in nebeneinander angeordnet sind und Leerstellen dazwischen festlegen, und
der tragende Kern (16) ferner Füllstreifen (20) aufweist, die die Leerstellen füllen.

5. Keramik-Verbundstruktur nach einem der vorstehenden Ansprüche, **dadurch gekennzeichnet, dass**:
mindestens ein Abschnitt von jeder der Deckschichten (12a, 14a) gekrümmt ist, und
die Kannelierungen (18a) der Krümmung des Deckschichten-Abschnitts entsprechen.

6. Keramik-Verbundstruktur nach einem der vorstehenden Ansprüche, **dadurch gekennzeichnet, dass** jede der Kannelierungen (18, 18a) eine Querschnittsform aufweist, die im Wesentlichen ein gleichschenkliges Trapezoid bildet.

7. Verfahren zur Herstellung einer Keramikmatrix-Verbundstruktur (10a), aufweisend die Schritte von:
(A) Bilden mehrerer Kannelierungen (18, 18a) unter Verwendung eines Keramik-Matrix-Verbu ndwerkstoffs;
(B) Platzieren der Keramikmatrix-Verbundkannelierungen (18, 18a), die in Schritt (A) gebildet werden, als ein tragender Kern (16) zwischen mindestens einem Abschnitt eines Paars räumlich getrennter Keramikmatrix-Verbunddeckschichten (12, 12a, 14, 14a), wobei mindestens einige der Kannelierungen (18, 18a) eine mit Keramikschaum befüllte geschlossene Zelle aufweisen;
(C) Bonden der Kannelierungen (18, 18a) an die Deckschichten (12, 12a, 14, 14a);
**gekennzeichnet durch**
(D) Platzieren eines weiteren festen Keramikkerns zwischen einem anderen Abschnitt der Deckschichten (12a, 14a); und
(E) Bonden des anderen Abschnitts der Deckschichten (12a, 14a) an den festen Keramikkern (16).

8. Verfahren nach Anspruch 7, wobei Schritt (A) mindestens einen der nachstehend aufgeführten Schritte aufweist:
- Wickeln eines Keramikmatrix-vorimprägnierten Fasergewebes über ein Werkzeug, und Härten der vorimprägnierten Faser;
- Bilden eines Werkzeugs durch Formen eines festen Schaums in ein Mandrell;
- Verbrennen des Schaums nach Aushärten der vorimprägnierten Faser.

9. Verfahren nach Anspruch 7 oder 8, wobei Schritt (A) aufweist:
nebeneinander verschachteltes Anordnen der Kannelierungen (18, 18a), und
Härten der angeordneten Kannelierungen (18, 18a).

10. Verfahren nach einem der Ansprüche 7 bis 9, ferner aufweisend den Schritt Installieren eines Füllstoffs (20) in Leerstellen zwischen angrenzenden Kannelierungen (18, 18a) und den Deckschichten (12, 12a, 14, 14a).

11. Verfahren nach einem der Ansprüche 7 bis 10, ferner aufweisend den Schritt:
(D) aneinander Laminieren von Abschnitten der Deckschichten (12, 12a, 14, 14a).

12. Verfahren nach einem der Ansprüche 7 bis 11, wobei Schritt (C) durch gleichzeitiges Härten der Deckschichten (12, 12a, 14, 14a) und der Kannelierungen (18, 18a) durchgeführt wird.

## Revendications

1. Structure composite à matrice céramique (10a), comprenant :
une paire de feuilles de parement composites à matrice céramique à distance l'une de l'autre (12, 12a, 14, 14a) ; et
une partie centrale porteuse (16) entre au moins une partie des feuilles de parement (12, 12a, 14, 14a), la partie centrale porteuse (16) comprenant des cannelures composites à matrice céramique (18, 18a), au moins certaines des cannelures (18, 18a) comprenant un compartiment fermé rempli de mousse de céramique,
**caractérisée en ce qu'**elle comprend en outre
une partie centrale structurale pleine entre une autre partie des feuilles de parement (12a, 14a).

2. Structure composite de céramique selon la revendication 1, **caractérisée en ce que** le compartiment comprend une paroi continue (18, 18a, b, c) délimitée par de multiples plis comprimés de résine renforcée par des fibres de céramique.

3. Structure composite de céramique selon l'une quelconque des revendications 1 à 2, **caractérisée en ce que** chacune des feuilles de parement (12, 12a, 14, 14a) comprend de multiples plis comprimés de résine renforcée par des fibres de céramique.

4. Structure composite de céramique selon l'une quelconque des revendications 1 à 3, **caractérisée en ce que** :
les cannelures (18, 18a) sont agencées suivant une disposition côte à côte et délimitent des vides entre elles et
la partie centrale porteuse (16) comprend en outre des bandes de matière de charge (20) remplissant les vides.

5. Structure composite de céramique selon l'une quelconque des revendications précédentes, **caractérisée en ce que** :
au moins une section de chacune des feuilles de parement (12a, 14a) est courbe et les cannelures (18a) se conforment à la courbure de la section de feuille de parement.

6. Structure composite de céramique selon l'une quelconque des revendications précédentes, **caractérisée en ce que** chacune des cannelures (18, 18a) a une forme de section transversale formant pratiquement un trapézoïde isocèle.

7. Procédé de fabrication d'une structure composite à matrice céramique (10a), comprenant les étapes consistant à :
(A) former une pluralité de cannelures (18, 18a) à l'aide d'un composite à matrice céramique ;
(B) disposer les cannelures composites à matrice céramique (18, 18a) formées dans l'étape (A) en tant que partie centrale porteuse (16) entre au moins une partie d'une paire de feuilles de parement composites à matrice céramique à distance l'une de l'autre (12, 12a, 14, 14a), au moins certaines des cannelures (18, 18a) comprenant un compartiment fermé rempli de mousse de céramique ;
(C) coller les cannelures (18, 18a) aux feuilles de parement (12, 12a, 14, 14a) ;
**caractérisé par**
(D) la disposition d'une autre partie centrale en céramique pleine entre une autre partie des feuilles de parement (12a, 14a) ; et
(E) le collage de l'autre partie des feuilles de parement (12a, 14a) à la partie centrale en céramique pleine.

8. Procédé selon la revendication 7, dans lequel l'étape (A) comprend au moins l'une des étapes suivantes :
- l'enveloppement de tissu préimprégné à matrice céramique sur l'outil et le durcissement du préimprégné ;
- la formation d'un outil par la mise d'une mousse rigide sous forme d'un mandrin ;
- l'incinération de la mousse après que le préimprégné a été durci.

9. Procédé selon la revendication 7 ou 8, dans lequel l'étape (A) comprend :
l'agencement des cannelures (18, 18a) suivant une disposition imbriquée côte à côte et
le durcissement des cannelures (18, 18a) ainsi agencées.

10. Procédé selon l'une quelconque des revendications 7 à 9, comprenant en outre l'étape consistant à installer une matière de charge (20) dans des vides entre des cannelures (18, 18a) adjacentes et les feuilles de parement (12, 12a, 14, 14a).

11. Procédé selon l'une quelconque des revendications 7 à 10, comprenant en outre l'étape consistant à :
(D) stratifier ensemble des parties des feuilles de parement (12, 12a, 14, 14a).

12. Procédé selon l'une quelconque des revendications 7 à 11, dans lequel l'étape (C) est effectuée par co-durcissement des feuilles de parement (12, 12a, 14, 14a) et des cannelures (18, 18a).
